# EUROPÄISCHE PATENTANMELDUNG

(11) **EP 1 447 762 A1**
(43) Veröffentlichungstag der Anmeldung: **18.08.2004**
(21) Anmeldenummer: 03019109.2
(22) Anmeldetag: 23.08.2003
(51) Int. Cl.: G06F 17/60

(54) **Personalisierendes Informations- und/oder Kommunikationssystem mit Bedienungsschnittstelle für mobile Nutzung**

(30) Priorität: 17.02.2003 DE 10306449
(71) Anmelder: Deutsche Telekom AG, 53113 Bonn (DE)
(72) Erfinder: Lochschmidt, Bernd, Dr., 64395 Brensbach (DE)

(57) **Zusammenfassung**

Die Erfindung betrifft einen personalisierenden Informationsund/oder Kommunikationsaustausch.

Aufgabe der Erfindung ist es, einen Weg aufzuzeigen mit welchem unter Verwendung wenigstens eines Telekommunikationsnetzes eine Erstellung von hochgradig personalisierten Informationen mit integrierter Profilanpassung auch bei zeitweiser Unabhängigkeit von einer Kommunikationsinfrastruktur gewährleistet ist.

Die erfindungsgemäße Lösung schlägt zum personalisierenden Informations- und/oder Kommunikationsaustausch ein zentrales Auslesen (13) eines gespeicherten Nutzerprofils vor, unter Ansprechen auf das Nutzerprofil ein Generieren (14) eines Sendedokuments basierend auf einem Nutzerprofil-spezifisch zusammengestellten Datensatzes und ein Übertragen des Sendedokuments zu einer unter dem Nutzerprofil gespeicherten Endeinrichtung (20), sowie ein Empfangen (16) eines von einer Endeinrichtung (20) rückübertragenen Sendedokuments mit auf Nutzerseite eingefügten Annotationen, ein Zuordnen des rückübertragenen Sendedokuments zu dem entsprechenden, zu der Endeinrichtung (20) übertragenen Sendedokument und Auswerten (17) der durch den entsprechenden Nutzer im Dokument eingefügten Annotationen.

## Beschreibung

Die Erfindung betrifft ein personalisierendes Informationsund/oder Kommunikationssystem sowie ein Verfahren zum personalisierenden Informations- und/oder Kommunikationsaustausch.

Personalisierungsverfahren finden zunehmenden Bedarf in im Wesentlichen allen Gebieten. Insbesondere in Gebieten, bei denen auf Anbieter- und/oder Herstellerseite auf individuelle Abnehmer- und/oder Kundenbedürfnisse einzugehen ist, ist es ein vorrangiges Ziel, ein möglichst genaues Profil einzelner Nutzer zu generieren, um einen Informationsfluss entsprechend den Anforderungen und Vorlieben der Nutzer zu kanalisieren. So können mittels Personalisierung auf eine Person oder Gruppe zugeschnittene Information zusammengestellt und angeboten werden, wobei auch geschützte Informationen einer Gruppe zugänglich gemacht werden. Beispielsweise wird ein Anbieter und/oder Hersteller von Produkten dazu in Lage versetzt, auf den jeweils individuell generierten Datensätzen basierend, seine Produkte den Nutzerbedürfnissen entsprechend kontinuierlich anzupassen und/oder die Nutzer über Neuerungen oder Ersatzteile entsprechend zu informieren. Ein weiteres wesentliches Ziel von Personalisierungsverfahren, beispielsweise auch in Bereichen des E-Commerce, liegt darin, Fluktuationsraten von Kunden/Nutzern zu minimieren.

Für die Realisierung derartiger Personalisierungsansätze, insbesondere zum Erfassen, Verarbeiten, Indizieren, Validieren und Übergeben von Personalisierungsdaten sowie darauf basierten Daten sind verschiedene Techniken bekannt. Hierzu zählen beispielsweise die dem Fachmann auf diesem Gebiet an sich bekannten Techniken und/oder Verfahren, wie OCR (Optical Character Recognition) zur optischen Erkennung von gedruckten Zeichen, OMR (Optical Mark Recognition) zur Erkennung markierungssensibler Bereiche wie Kreuze und Häkchen, ICR (Intelligent Character Recognition) oder INR (Intelligent Number Recognition) zur Erkennung von handgeschriebenen (Druck-)Buchstaben bzw. Ziffern.

Das individuelle Bereitstellen von Informationflüssen erfolgt üblicherweise unter Zusammenwirken mit einem Inhaltsverwaltenden Systen, einem sogenannten Content-Management-System (CMS), welches unterschiedlichste Daten modular in einer Datenbank verwaltet und entsprechend den jeweiligen Personalisierungsdaten darauf zugreift. Anwendungsspezifisch werden ferner angepasste Schnittstellen vorgesehen, um beispielsweise den Zugriff auch auf Emailpostfächer oder das Zugreifen auf ausgewählte Publikationsplattformen zu gewährleisten.

Grundsätzlich sind Personalisierungsverfahren hierbei aktiv oder passiv ausgebildet. Bei einem aktiven oder expliziten Personalisierungsverfahren gibt der Nutzer selbsttätig die Daten, auf deren Basis die Personalisierung erfolgen soll, vor. Bei passiven oder impliziten Personalisierungsverfahren resultiert die Personalisierung aus der Beobachtung des Nutzerverhaltens heraus.

Somit liegt ein wesentlicher Nachteil derzeit bekannter Personalisierungsverfahren darin, dass bei Einsatz elektrisch und/oder elektronisch basierter Medien zur Datenerfassung und - übertragung eine Profilanpassung lediglich bei einer über einen längeren Zeitraum bestehenden Online-Verbindung zwischen Endgeräten auf der Anbieter- und/oder Herstellerseite sowie der Nutzerseite durchführbar ist, welches in Folge zu einer höheren Belastung des verwendeten Telekommunikationsnetzes führt.

Aufgabe der Erfindung ist es, einen Weg aufzuzeigen mit welchem unter Verwendung wenigstens eines Telekommunikationsnetzes eine Erstellung von hochgradig personalisierten Informationen mit integrierter Profilanpassung auch bei zeitweiser Unabhängigkeit von einer Kommunikationsinfrastruktur gewährleistet ist, welches insgesamt eine verbesserte Nutzung von Telekommunikationsnetzen ermöglicht.

Die erfindungsgemäße Lösung der Aufgabe ist bereits durch ein Verfahren mit den Merkmalen des Anspruchs 1, durch eine Vorrichtung mit den Merkmalen des Anspruchs 19, durch System mit den Merkmalen des Anspruchs 33 und/oder durch ein Computerprogrammprodukt, Computerprogramm oder Digitales Speichermedium mit den Merkmalen des Anspruchs 42, 43 bzw. 44 gekennzeichnet.

Vorteilhafte und/oder bevorzugte Ausführungsformen bzw. Weiterbildungen sind Gegenstand der jeweils abhängigen Ansprüche.

Erfindungsgemäß ist somit vorgesehen, aus einer Speichereinrichtung ein Nutzerprofil zentral auszulesen, unter Ansprechen auf das Nutzerprofil ein Sendedokument auf einem Nutzerprofil-spezifisch zusammengestellten Datensatzes basierend zu generieren und zu einer unter dem Nutzerprofil gespeicherten Endeinrichtung zu übertragen, und unter Ansprechen auf das Empfangen eines von einer Endeinrichtung rückübertragenen Sendedokuments mit auf Nutzerseite eingefügten Annotationen, eine Zuordnung zu dem entsprechenden, zu der Endeinrichtung übertragenen Sendedokument vorzunehmen und die durch den entsprechenden Nutzer im Dokument eingefügten Annotationen auszuwerten.

Die Erfindung sieht bevorzugt die Verwendung einer Personalisierungsvorrichtung mit einer zentralen Sendeeinheit und einer mit der zentralen Sendeeinheit zum gegenseitigen Datenaustausch ausgebildeten zentralen Empfangseinheit vor, bei welcher die zentrale Sendeeinheit und die zentrale Empfangseinheit über wenigstens ein Telekommunikationssystem mit wenigstens einer dezentralen Endeinrichtung auf Nutzerseite zur Datenübertragung verbindbar sind. Die zentrale Sendeeinheit ist unter Ansprechen auf ein ausgelesenes, gespeichertes Nutzerprofil zum Generieren eines Nutzerprofil-spezifischen Sendedokuments und zum Übertragen des Sendedokuments zu einer unter dem Nutzerprofil gespeicherten Endeinrichtung ausgebildet. Die zentrale Empfangseinheit ist zum Zuordnen eines von einer Endeinrichtung rückübertragenen Sendedokuments mit auf Nutzerseite eingefügten Annotationen zu dem entsprechenden, zu der Endeinrichtung zuvor übertragenden Sendedokuments und zur Auswertung der in dem rückübertragenen Sendedokument eingebundenen Annotationen ausgebildet. Die Erfindung gewährleistet somit dem individuellen Nutzungsbedarf angepasste Informationen und Nachrichten über eine TK-Schnittstelle an eine Endeinrichtung zu übertragen und ein in intuitiver Weise durch einen Nutzer annotiertes Dokument zu empfangen und hinsichtlich geänderter Nutzungswünsche auszuwerten, wobei der interaktive Kommunikationsprozesses anstelle einer ständigen Online-Verbindung lediglich kurzzeitige und bedarfsspezifische Verbindungen ausschließlich zum Zwecke der Datenhin- und Datenrückübertragung benötigt.

Basierend auf einem Informations- und/oder Kommunikationssystem, welches eine Personalisierungsvorrichtung und wenigstens eine mit der Personalisierungsvorrichtung über wenigstens ein Telekommunikationsnetz verbindbare dezentrale Endeinrichtung mit TK-Schnittstelle auf Nutzerseite aufweist, können somit verwendete bzw. bestehende Telekommunikationsnetze auch bei zunehmenden Einsatz von Technologien hochgradiger Personalisierungsanwendungen wesentlich entlastet werden, welches in Folge zu einer verbesserten Kapazitätsnutzung der Netze führt. Da darüber hinaus insbesondere auf Nutzerseite im Wesentlichen jede Endeinrichtung mit einer Telekommunikationsschnittstelle verwendbar ist, ermöglicht die Erfindung eine äußerst flexible Anpassung, wobei das Einfügen von Annotationen unabhängig von einer bestehenden Kommunikationsinfrastruktur ist.

Das erfindungsgemäße Verfahren zur personalisierten Informations- und/oder Kommunikationsübertragung ist somit bereits bei einer asynchron bereitgestellten Telekommunikationsverbindung gewährleistet und somit im Wesentlichen unabhängig von auf dem verwendeten Kommunikationsnetz basierten Fehlern und/oder Ausfällen. Ferner gewährleistet es folglich auch bei zeitweisem Aufenthalt von Nutzern zugeordneten Endgeräten in Zonen, die frei von Kommunikationsnetzen sind und/oder deren Kommunikationsnetze überlastet sind ein zeitunkritisches und sicheres Vorgehen.

Damit das Generieren von Sendedokumenten stets auf einem aktuellen Nutzerprofil basiert, ist gemäß einer ersten bevorzugten Weiterbildung vorgesehen, unter Ansprechen auf das Auswerten von im rückgesendeten Sendedokument eingefügten Annotationen, das entsprechende Nutzerprofils zu aktualisieren und anschließend zu speichern.

In besonders bevorzugter Weiterbildung ist erfindungsgemäß vorgesehen, dass zumindest die von der zentralen Sendeeinheit und/oder der zentralen Empfangseinheit durchzuführenden Schritte zumindest teilweise automatisch, bevorzugt vollumfänglich automatisch durchgeführt werden.

Um auf effiziente Weise die Erstellung von hochgradig personalisierter Informationen mit der integrierten Möglichkeit einer flexiblen, individuellen Nutzerprofilanpassung zu gewährleisten, schlägt die Erfindung bevorzugt das Generieren, also insbesondere das automatische Generieren von Interaktionsfeldern in dem Sendedokument und das entsprechende Auswerten, also insbesondere das automatische Auswerten von durch den Nutzer annotierten Interaktionsfeldern, insbesondere hinsichtlich geänderter Nutzungswünsche, vor. Die Erfindung ermöglicht somit die Verwendung von Interaktionsfeldern als Informationsrückkanal in Form eines automatisierten Prozesses.

Zum Zwecke einer effektiven und schnellen, insbesondere automatisierten Zuordnung eines rückübertragenen Sendedokuments zu dem entsprechenden, zuvor an die Endeinrichtung übertragenen Sendedokument bindet die zentrale Sendeeinheit eine eindeutige Kennung, vorzugsweise einen Barcode und/oder einen vergleichbaren Marker in das Sendedokument ein.

Ist gemäß zweckmäßiger Weiterbildung das spezifische Profil einer dem Nutzer zugeordneten Endeinrichtung mit TK-Schnittstelle gespeichert und in Folge auslesbar, erfolgt in vorteilhafter Weise eine medienspezifische Formatierung des Datensatzes und/oder des Sendedokuments mit eingebundenen Interaktionsfeldern, so dass insbesondere auf Nutzerseite eine vielseitige Nutzung, insbesondere auch mobile Nutzung des Sendedokuments ermöglicht ist.

In Bezug auf die Generierung von Sendedokumenten schlägt die Erfindung zur Speicherung und Bereitstellung von Informationen, insbesondere von indexierten Informationen, wie Texten und Bildern aber auch von Nachrichten, wie beispielsweise Email s und Sprachnachrichten, in bevorzugter Weiterbildung vor, dass die zentrale Sendeeinheit ein inhaltsverwaltendes System, beispielsweise ein sogenanntes "Content Management System" (CMS) umfasst und/oder zur Verwaltung individueller Benutzerprofile ein Personalisierungssystem.

Darüber hinaus sieht die Erfindung in vorteilhafter Weiterbildung vor, die zentrale Sendeeinheit mit einem Dokumentengenerierungssystem bereitzustellen, um, beispielsweise auch unter Anwendung bestehender Techniken, eine benutzerspezifische Selektion von Informationen und/oder Nachrichten, eine medienspezifische und/oder Endeinrichtungsbasierte Formatierung und/oder Einbindung von Interaktionsfeldern in ein Sendedokument durchzuführen.

Zweckmäßige Ausführungsformen umfassen ferner eine Speicherund Übertragungseinheit, die derart ausgebildet ist, dass generierte Sendedokumente zwischengespeichert und für eine Informationsabfrage von Seiten des Nutzers bereitgestellt werden und/oder zeitgesteuert an die entsprechend zugeordnete Endeinrichtung ausgesendet werden.

Zur benutzerspezifischen Generierung von Sendedokumenten ist ferner bevorzugt vorgesehen, dass die zentrale Sendeeinheit zumindest zeitweise auf dem Nutzer zugeordnete Diensteinrichtungen zugreift.

Derartige Diensteinrichtungen sind insbesondere zentral gesteuerte elektronische Postfächer, Email Sende-/Empfangseinrichtungen und/oder Verwaltungseinrichtungen, Kalendereinrichtungen und/oder sogenannte Softphone-Einrichtungen.

Darüber hinaus ist zur Generierung von Sendedokumenten bevorzugt vorgesehen, dass die zentrale Sendeeinheit wenigstens zeitweise auf mit einem öffentlichen Kommunikationsnetz verbundene, insbesondere Onlinedienste und/oder Datenbankdienste umfassende Diensteinrichtungen, zugreift.

Von der Endeinrichtung empfangene Sendedokumente sind dem Nutzer bevorzugt derart anzeigbar, dass dieser zeitunabhängig die Interaktionsfelder intuitiv annotieren kann. Die Erfindung eröffnet somit die Möglichkeit, kurzzeitige und bedarfsspezifische Kommunikationsverbindungen zwischen einer Endeinrichtung und der zentralen Sende- und/oder Empfangseinheit zu Zeiten zu nutzen, zu denen eine ausreichende Kapazität des bzw. der verwendeten Kommunikationsnetze(s) zu Verfügung steht, und jeweilige Down- bzw. Uploadvorgänge somit auf eine schnelle und somit kostengünstig Weise durchführbar sind.

In einfachster Ausführung ist vorgesehen, dass die wenigstens eine dezentrale Endeinrichtung auf Nutzerseite zumindest ein Sende- und Empfangsgerät mit TK-Schnittstelle umfasst, wobei das bereits eine Endeinrichtung zur visuellen oder akustischen Anzeige von empfangenen Daten ausreichend ist.

Zur weiteren Erhöhung der Flexibilität in Bezug auf notwendige Technik sowie auf die Nutzung der Erfindung insgesamt, umfasst eine bevorzugte erfindungsgemäße Weiterbildung das Anzeigen des empfangenen Sendedokuments auf einem mobilen Medium, insbesondere auf einer Handgerechten Einrichtung, wie z.B. einem PDA (personal digital assistant), oder ausgedruckt auf Papier.

Hierzu ist insbesondere vorgesehen, dass die wenigstens eine dezentrale Endeinrichtung auf Nutzerseite einen PC mit TK-Anbindung umfasst, wobei in vorteilhafter Weiterbildung die TK-Anbindung eine Docking-Station für eine derartige PDA-Einrichtung oder vergleichbare Einrichtung, wie beispielsweise ein sogenanntes WebPad, umfasst und die Endeinrichtung eine entsprechende Kommunikationssoftware für die PDA-Einrichtung beinhaltet.

Ferner ist zur Erhöhung der mobilen und flexiblen Nutzung des Erfindungsgegenstandes bevorzugt vorgesehen, dass die Nutzer-Endeinrichtung derart angepasst ist, übertragene Daten auf ein externes Medium zu speichern und entsprechend extern gespeicherte Daten einzulesen.

Gemäß einer zweckmäßig sehr einfachen Ausführungsform, weist eine einem Nutzer zugeordnete Endeinrichtung mit TK-Schnittstelle einen Drucker und Scanner auf, beispielsweise ein handelsübliches Faxgerät mit Einlesefunktion und/oder ein spezialisiertes Endgerät mit vergleichbaren Funktionen.

Der Nutzer wird somit in die Lage versetzt, Annotationen in ein empfangenes Sendedokument auf einem externen Medium, wie beispielsweise Papier, einzufügen. Zur Rückübertragung wird das annotierte Sendedokuments vom externen Medium wiederum eingelesen.

In bevorzugter Weise sieht die Erfindung ferner vor, dass die Nutzer-Endeinrichtung in Bezug auf das Empfangen und Senden zum Verwenden gleicher oder unterschiedlicher Medien als externe Informationsträger ausgebildet ist.

So sieht eine weitere bevorzugte Ausführung vor, dass die Nutzer-Endeinrichtung mit entsprechenden Schnittstellen und einer Steuerungselektronik derart angepasst ist, anstelle von oder zusätzlich zu Papier sogenanntes elektronisches Papier, "ePaper" zu verwenden, welches ähnlich wie herkömmliches Papier ein dünnes und leichtes externes Medium zur Verfügung stellt, jedoch wiederbeschreibbar ist.

In ergänzender oder alternativer Weise ist ferner bevorzugt vorgesehen, das Einfügen von Annotationen an der Endeinrichtung über eine Eingabeeinrichtung und/oder sprachgesteuert durchzuführen.

Darüber hinaus ist die Endeinrichtung bevorzugt mit Hardund/oder Softwaremodulen ausgebildet, um ein generiertes Sendedokument durch Informationsabfrage abzurufen und/oder ein empfangenes Sendedokument zwischen zu speichern.

Ferner weist die zentrale Empfangseinheit zweckmäßiger Weise eine Dokumentenempfangseinheit zur jeweiligen Aufnahme und/oder Zwischenspeicherung von wenigstens einem rückübertragenen Sendedokument auf.
Eine der zentrale Empfangseinheit zugeordnete Auswerteeinheit bewirkt daraufhin die Erkennung des zugehörigen Sendedokuments und die Auswertung benutzerspezifischer Annotationen. Die Aktualisierung und Modifikation des individuellen Benutzerprofils unter Ansprechen auf die Auswertung der Annotationen erfolgt schließlich bevorzugt automatisch unter Zusammenwirken mit dem Personalisierungssystem der zentralen Sendeeinheit.

Zur Erkennung und Auswertung benutzerspezifischer Annotationen sieht die Erfindung praktischerweise vor, dieses mittels OMR, OCR, INR, ICR und/oder vergleichbaren Funktionalitäten durchzuführen, so dass bereits bestehende technische Lösungen auf einfache Weise in den erfindungsgemäßen Gegenstand integrierbar sind., wobei eine entsprechende erfolgt.

Die Erfindung sieht ferner vor, dass die zentrale Sendeeinheit und die zentrale Empfangseinheit auch an physikalisch verschiedenen Orten realisiert sein können, und mittels eines Kommunikationsnetzes miteinander zum Datenaustausch verbunden oder verbindbar sind.

Für die Erfindung eignet sich folglich im wesentlichen jedes Kommunikationsnetz, beispielsweise ein öffentliches Fernsprechnetz oder anwendungsspezifisch auch ein Intranet. Insbesondere ist jedoch eine Implementierung der Erfindung auf der Basis des Internets und/oder von Mobilfunknetzen bevorzugt.

Um das erfindungsgemäße Verfahren darüber hinaus auf bereits bestehenden Einrichtung durchzuführen, schlägt die Erfindung ferner ein Computerprogrammprodukt mit auf wenigstens einem computerlesbaren Träger gespeichertem Programmcode und/oder ein, beispielsweise aus dem Internet abrufbares Computerprogramm mit Programmcode zur Durchführung des erfindungsgemäßen Verfahrens, wenn das Programm auf einer einen Prozessor umfassenden Einrichtung mit TK-Schnittstelle abläuft sowie ein digitales Speichermedium, insbesondere eine Diskette oder CD, mit elektronisch auslesbaren Steuersignalen, die so mit einer programmierbaren Einrichtung mit TK-Schnittstelle zusammenwirken können, dass ein erfindungsgemäßes Verfahren ausgeführt wird.

Die Erfindung wird nachfolgend anhand eines bevorzugten Ausführungsbeispiels unter Bezugnahme auf die beigefügte Zeichnung näher beschrieben.

In der Zeichnung zeigt
- Fig. 1: eine stark vereinfachte Prinzipskizze eines erfindungsgemäßen Informations- und/oder Kommunikationssystems zur Durchführung des erfindungsgemäßen Verfahrens, und
- Fig. 2: ein beispielhaftes, zur Nutzerannotation automatisch generiertes Sendedokument basierend auf einem zentral gespeicherten Nutzerprofil.

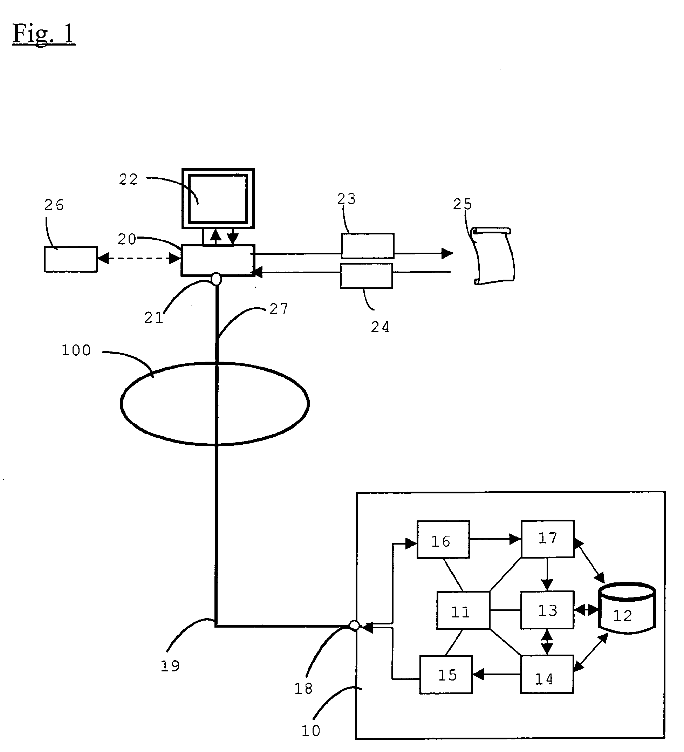

Nachfolgend wird zunächst auf Fig. 1 Bezug genommen, welche in stark vereinfachter Weise ein bevorzugtes jedoch beispielhaftes pesonalisierendes Informationssystem gemäß der Erfindung darstellt.

Dargestellt ist ein zentraler Personalisierungsserver 10, welcher mittels einer entsprechend ausgebildeten Telekommunikationsschnittstelle 18 über Kommunikationsnetze 19, 100 und 27 mit einer dezentralen Nutzer-Endeinrichtung 20, die eine für das Kommunikationsnetz 27 entsprechend ausgebildete Telekommunikationsschnittstelle 21 aufweist, zur gegenseitigen Datenübertragung miteinander verbunden ist.

Die Kommunikationsnetze 19 und 27 sind im vorliegenden Beispielsfall zwei unterschiedliche öffentliche Telefonnetze und das Kommunikationsnetz 100 das weltumspannende Internet. Es sei jedoch darauf hingewiesen, dass die Kommunikationsnetze 19, 27 und 100 auch anderer Art sein können, beispielsweise kann das Kommunikationsnetz 100 auch ein Mobilfunknetz oder ein Satelliten-gestütztes Kommunikationsnetz sein und die Kommunikationsnetze 19 und/oder 27 firmeninterne Netze, wie beispielsweise ein Intranet. Selbstverständlich ist es anwendungsspezifisch bereits ausreichend, lediglich ein Kommunikationsnetz zwischen der zentralen Servervorrichtung 10 und der dezentralen Nutzer-Endeinrichtung 20 zu nutzen, welches beispielsweise ein gemeinsames öffentliches Festnetz oder ein gemeinsames Funknetz darstellt.

Wesentlich für die Erfindung wesentlich ist, dass die Personalisierungsvorrichtung 10 und die Nutzer-Endeinrichtung 20 für die jeweils unmittelbar angeschlossenen Telekommunikationsnetze entsprechend ausgebildete Telekommunikationsschnittstelle 18 bzw. 21 und/oder ggf. eine entsprechende Software umfassen. Es sei darauf hingewiesen, dass lediglich aus Gründen der Übersichtlichkeit nur eine Nutzer-Endeinrichtung 20 dargestellt ist, welches die Grundlage für die nachfolgende Beschreibung bildet. Erfindungsgemäß ist der zentrale Personalisierungsserver 10 jedoch derart mit Schnittstellen und einer Logik ausgebildet, dass zu einer Vielzahl von dezentralen Nutzer-Endeinrichtungen parallele Verbindungen zum jeweiligen Datenaustausch aufbaubar sind. So umfasst die Erfindung insbesondere auch Ausführungsformen, bei denen die zentrale Personalisierungsvorrichtung 10 als Webserver dem Internet angeschaltet ist und folglich einer Vielzahl von Endeinrichtungen 20 über das Internet zugänglich ist.

Der beispielhaft bei Fig. 1 dargestellte Personalisierungsserver 10 umfasst eine zentrale Steuer- und Regeleinheit 11, welche die internen Prozesse und Abläufe koordiniert.

Ferner umfasst der Server 10 ein Content-Management System 12 zur Speicherung und Bereitstellung von unterschiedlichsten Informationsdaten, beispielsweise indexierte Informationen wie Texte und/oder Bilder und Nachrichten, wie z.B. Email s und/oder Sprachnachrichten. Zum Konvertieren einer Sprach- in eine Textnachricht ist dem ein Content-Management System 12 zweckmäßiger Weise ein Spracherkennungssystem zugeordnet. Zum Speichern und Verwalten individueller Benutzerprofile ist ferner ein mit dem Content-Management-System 12 gekoppeltes Personalisierungssystem 13 umfasst. Unter Zusammenwirken mit einem Dokumentengenerierungssystem 14 werden auf dem jeweiligen Benutzerprofil basierend Informationen und Nachrichten benutzerspezifisch selektiert und Sendedokumente, wie nachfolgend detaillierter beschrieben, unter Einbindung von Interaktionsfeldern medienspezifisch formatiert.

Schließlich umfasst der Server 10 eine mit dem Dokumentengenerierungssystem 14 verbundene Speicher- und Weitergabeeinheit 15, welche die von dem Dokumentengenerierungssystem generierten Sendedokumente speichert und für eine Informationsabfrage durch eine dem jeweiligen Benutzerprofil entsprechend zuordenbare Nutzer-Endeinrichtung 20 in Form'eines "Pull-Betriebs" bereithält und/oder zeitgesteuert an die entsprechende Benutzer-Endeinrichtung 20 aussendet, also einen sogenannten "Push-Betrieb" bereitstellt.

Die Endeinrichtung 20 ist somit zweckmäßiger Weise mit entsprechender Hard- und/oder Softwaremodulen ausgebildet, um ein generiertes Sendedokument durch Informationsabfrage beim Server abzurufen.

Zum Empfangen von von der Endeinrichtung 20 rückgesendeten, insbesondere annotierten Sendedokumenten, wie nachfolgend detaillierter beschrieben, weist der Server 10 eine Dokumentenempfangseinheit 16 auf, die zur Aufnahme und Zwischenspeicherung von eingehenden Dokumenten ausgebildet ist. Ferner weist der Server 10 eine mit der Dokumentenempfangseinheit 16 und dem Personalisierungssystem 13 gekoppelte Auswerteeinheit 17 zur Erkennung des zugehörigen ursprünglichen Sendedokuments, zur Erkennung und Auswertung von benutzerspezifischen Annotationen und im Zusammenwirken mit dem Personalisierungssystem 13 zum Modifizieren des entsprechenden Benutzerprofils.

Die dargestellte Endeinrichtung 20 auf Nutzerseite ist im vorliegenden Beispielsfall ein mit der Telekommunikationsschnittstelle 21 ausgebildeter Rechner, der ein empfangenes Sendedokument zwischenspeichern kann und zur visuellen Anzeige einen Monitor 22 umfasst. Ferner ist der Rechner 20 mit einem Drucker 23 sowie einem Scanner 24 verbunden, um Dokumente in Papierform 25 auszudrucken und zur digitalisierten Weiterverarbeitung einlesen zu können. Schließlich umfasst der Rechner 20 eine nicht näher dargestellte Docking-Station für einen mit dem Rechner koppelbaren PDA 26 sowie entsprechende Kommunikationssoftware für das Medium PDA.

Es sei darauf hingewiesen, dass je nach spezifischer Ausbildung die Nutzer-Endeinrichtung 20 auch eine andere Telekommunikations-Endeinrichtung sein kann, zur bevorzugten mobilen Nutzung insbesondere mit Drucker- und Scannerfunktionen inklusive Papier-Handling. Beispielsweise ein handelsübliches Faxgerät mit Einlesefunktion oder ein spezialisiertes Endgerät mit vergleichbaren Funktionen. Darüber hinaus umfasst die Erfindung ferner Ausführungsformen, bei denen die Nutzer-Endeinrichtung 20 andere Sende- und Empfangseinheiten bevorzugt mit vorstehend beschriebenen Funktionalitäten umfasst, jedoch für andere Medien als Informationsträger angepasst ist, wie beispielsweise für ePaper. Ein derartiger kunststoffbeschichteter Film mit darin schwimmend gehaltenen Kapseln, die mittels entsprechender Steuerungselektronik angelegter elektrischer Spannung zur Anzeige von Zeichen ausgerichtet werden, bietet somit ähnlich wie normales Papier einen dünnen, leichten Informationsträger, der jedoch wiederbeschreibbar ist. Darüber hinaus sind mit der Erfindung auch als tragbarer Pocket PC oder internetfähiges Mobilgerät, wie beispielsweise als sogenanntes WebPad oder Handheld, ausgebildete Endeinrichtungen erfasst.

Es sei ferner darauf hingewiesen, dass die vorstehend beschriebenen Systemeinrichtungen für einen Wirkbetrieb durch weitere Funktionalitäten insbesondere unter Abrechnungs-, Autorisierungs- und/oder Sicherheitsaspekten anwendungsspezifisch ergänzbar sind, auf welches in der vorliegenden Beschreibung jedoch nicht näher eingegangen wird.

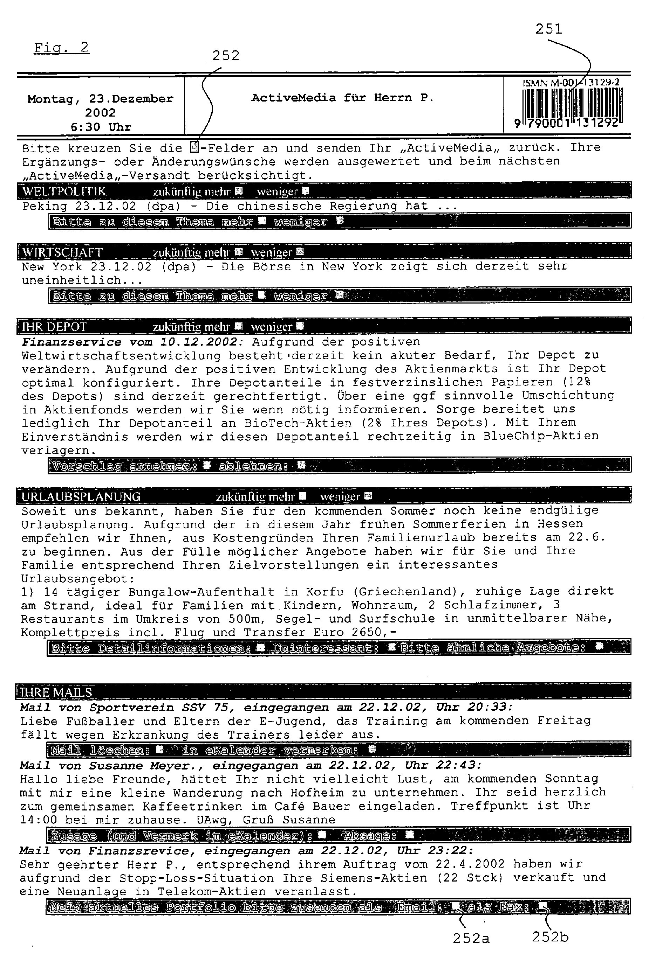

Nachfolgend wird die erfindungsgemäße Funktionsweise näher beschrieben, wobei zusätzlich auf Fig. 2 Bezug genommen wird.

Von der zentralen Personalisierungsvorrichtung 10 werden, basierend auf einem jeweiligen Benutzerprofil, dem individuellen Nutzungsbedarf angepasste Informationen und Nachrichten zusammengestellt und als Sendedokument über die Telekommunikationsschnittstelle 18 zu einer, insbesondere unter dem Nutzerprofil gespeicherten, Nutzer-Endeinrichtung 20 mit Telekommunikationsschnittstelle 21 übertragen.
Je nach gewünschter Anpassung erfolgt dies beispielsweise zu vorgebbaren Zeitpunkten und/oder Themen und/oder nach entsprechender Aufforderung durch den Nutzer.

Das von der Endeinrichtung 20 zeitgesteuert oder nach Informationsabfrage empfangene Sendedokument wird im vorliegenden Beispielsfall am Monitor 22 angezeigt oder auf ein mobiles Medium, beispielsweise über den Drucker 23 auf Papier oder über mittels der Kommunikationssoftware auf das PDA 26 übertragen. Nach Empfang des Sendedokumentes braucht eine Verbindung zwischen der Nutzer-Endeinrichtung 20 und dem zentralen Server 10 nicht mehr aufrechterhalten zu werden.

Das empfangene Sendedokument kann nun vom Nutzer in intuitiver Weise zeitunabhängig bearbeitet, insbesondere die eingebunden Interaktionsfelder annotiert werden und zu einem im Wesentlichen beliebigen Zeitpunkt an den Server 10 rückübertragen werden. Hierzu wird von der Endeinrichtung 20 eine Datenverbindung zum Server 10 aufgebaut, beispielsweise mittels einer entsprechend angepassten "Rücksendefunktionalität". Sofern das Sendedokument vom Nutzer zur Bearbeitung auf ein mobiles Medium exportiert wurde, muss dieses selbstverständlich vor Rückübertragung wieder in die Endeinrichtung 20, beispielsweise über den Scanner 24 eingebunden werden.

Je nach spezifischer Ausbilder der Endeinrichtung 20 ist in ergänzender oder alternativer Weise ferner bevorzugt vorgesehen, das Einfügen von Annotationen beispielsweise über eine Tastatur oder eine andere Eingabeeinrichtung und/oder sprachgesteuert durchzuführen.

Die Empfangseinheit 16 des Servers 10 nimmt das vom Nutzer rückgesendete Sendedokument auf und speichert dies ggf. zwischen. Anschließend werden die empfangenen Daten des rückgesendeten Sendedokuments zur Auswerteeinheit 17 übergeben, welche eine Erkennung des ursprünglichen Sendedokuments bzw. Zuordnung hierzu anhand einer eindeutigen, in das ursprüngliche Sendedokument eingebundenen Kennung durchführt. Wie bei Fig. 2 zu sehen, erfolgt dies gemäß einer bevorzugten Ausführungsform mittels eines im Sendedokument eingebundenen Barcodes 251. Nachdem das ursprüngliche Sendedokument zugeordnet worden ist, wird eine automatische Erkennung und Auswertung benutzerspezifisch eingefügter Annotationen durchgeführt. Hierzu weist die Auswerteeinheit 17 insbesondere Hard- und/oder Software basierte Module und/oder Funktionalitäten zum Durchführen optischer Erkennungsverfahren von (handgeschriebenen) Druckbuchstaben, Ziffern und/oder Markierungen auf. Derartige Module und/oder Funktionalitäten sind dem Fachmann auf diesem Gebiet heutzutage beispielsweise unter OCR (zur optischen Druckbuchstabenerkennung), OMR (zur optischen Markierungserkennung, wie Ankreuzungen, Einkreisungen und/oder Durchstreichungen), ICR (zur optischen Erkennung handgeschriebener Buchstaben) und/oder INR (zur optischen Erkennung handgeschriebener Ziffern) bekannt.

Nach Auswertung der benutzerspezifischen Annotationen wird das vom Personalisierungssystem 13 verwaltete Benutzerprofil entsprechend modifiziert bzw. aktualisiert, so dass bei erneutem Generieren eines personalisierten Sendedokuments die vorausgegangenen Annotationen im Benutzerprofil bereits Berücksichtigung finden.

Der interaktive Kommunikationsprozess zwischen der zentralen Personalisierungsvorrichtung 10 und einer Nutzer-Endeinrichtung 20, bzw. mobilen Medien 26 und/oder 25 benötigt somit keine ständige Online-Verbindung sondern lediglich eine kurzzeitige und bedarfsspezifische Verbindung. Die jeweiligen Hin- und Rückübertragungen können somit asynchron verlaufen.

Die in das Sendedokument eingebundenen Interaktionsfeldern, werden folglich als Informationsrückkanal zur hochgradigen Profilanpassung in Form eines automatisierten Prozesses verwendet. Einerseits ist somit auf Seiten des zentralen Servers 10 die Erstellung von hochgradig personalisierten Informationen gewährleistetet, mit der integrierten Möglichkeit einer durch den Benutzer aktiv vorgebbaren Profilanpassung, und ggf. applikationsspezifisch durch zusätzliche Beobachtung des Nutzerverhaltens durch den Server. Andererseits ermöglicht die Erfindung zusätzlich eine mobile Nutzung und/oder Bearbeitung der Interaktionsfelder auf Seiten des Nutzers, beispielsweise auf externen Medien, wie Papier.

Um eine möglichst weitreichende Personalisierung und benutzerspezifische Selektion von Informationen zu gewährleisten, weist der Server 10, insbesondere in Form eines Webserver, in bevorzugter Ausführung auch zum Zugreifen auf öffentliche Informations- und/oder Kommunikationsplattformen, wie z.B. Onlinedienste und/oder Datenbankdienste, entsprechend ausgebildete Schnittstellen auf.

Darüber hinaus ist es zweckmäßig, dass der Server 10 ferner Informations- und/oder Diensteinrichtungen, die dem jeweiligen Nutzer zugeordnet sind, verwaltet und/oder Zugriff darauf hat. Dies kann beispielsweise dadurch erfolgen, dass z.B. Emailpostfächer, Kalender und oder Soft-Phone- bzw. Anrufbeantwortereinrichtungen der Personalisierungsvorrichtung 10, insbesondere dem inhaltsverwaltenden System 12, zur Verwaltung zugeordnet sind oder aber diese zumindest zeitweisen Zugriff auf diese Diensteinrichtungen haben.

Nachfolgend wird das erfindungsgemäße Verfahren anhand eines beispielhaften Szenarios mit intuitiver Bedienungsschnittstelle für einen fiktiven Herrn P. kurz aufgezeigt.

Basierend auf der Auswahl der Benutzerprofildaten durch das Personalisierungssystem 13 werden entsprechend des gespeicherten Benutzerprofils ausgewählte Informationen unter Zusammenwirken mit dem inhaltsverwaltenden System 12 und dem Dokumentengenerierungssystem 14 benutzerspezifisch selektiert und entsprechend einer von Herrn P. gewünschten Medienform beispielsweise zum Ausdruck auf Papier 25 entsprechend formatiert. Die Übertragung eines unter "ActiveMedia" bezeichneten, generierten Sendedokuments erfolgt hierbei z.B. zeitgesteuert jeden Morgen direkt an das Faxgerät des Herrn P.

Zur Wiedererkennung des zugehörigen Sendedokuments nach Empfang eines rückgesendeten, annotierten Sendedokuments weist das beispielhaft dargestellte generierte Sendedokument gemäß Fig. 2 einen Barcode 251 auf. Ferner umfasst das Dokument den Tag, das Datum und die Uhrzeit der Generierung, sowie eine Kurzanweisung über die Verwendung eingebundener Interaktionsfelder und darauf folgend die einzelnen benutzerspezifisch zusammengestellten Informationen und Nachrichten.

Wie Fig. 2 ferner zu entnehmen ist, sind verschiedene Interaktionsfelder 252 vorgegeben, die im Bedarfsfall vom Nutzer markiert, im vorliegenden Fall angekreuzt werden können.

Diese Interaktionsfelder umfassen im Falle durchgeführter Markierung für die Auswerteeinheit 17 definierte und/oder definierbare Information bzw. Anweisungen. Beispielsweise die Anforderung "zukünftig mehr" über ein Themengebiet zusammenzustellen, oder "weniger" oder aber, dass ein spezielles Thema zukünftig "nicht mehr" gewünscht ist.

Interessiert den Kunden beispielsweise ein Kurzartikel, kann dieser ein Kreuz in einem "mehr"-Feld oder ggf. auch bei einem "Vorlesen"-Feld einfügen. Hat er alle gewünschten Annotationen vorgenommen, sendet er das Dokument zurück, beispielsweise mittels einer entsprechenden "Rücksende"-Taste am Faxgerät, so dass das rückgesendete Dokument beim Server automatisch ausgewertet wird. Bei dem nächsten individuell generierten Dokument erhält er bereits den vollen Nachrichtentext zum gewünschten Thema oder aber ein spezieller Operator ruft ihn unter einer bestimmten Rufnummer an, um den gewünschten Nachrichtentext vorzulesen.

Je spezieller das Benutzerprofil, insbesondere durch kontinuierliche Auswertung der jeweils annotierten Interaktionsfelder, adaptiert wird, ist beispielsweise ferner das Auswählen von ggf. attraktiven Angeboten, beispielsweise der Urlaubsplanung generierbar. Wirkt der zentrale Server 10 ferner mit Email , Kalender und/oder Anrufbeantworterdiensteinrichtungen zusammen, so kann die Generierung von Interaktionsfeldern überdies dahingehend erweitert werden, dass definierte Anweisungen zum Verwalten der Diensteinrichtungen und Ansprechen auf die gesammelten und/oder generierten Informationen mittels der Interaktionsfelder rückgesendet werden.

Im vorliegenden Fall hat der Server beispielsweise auf ein dem Nutzer zugeordnetes Depot Zugriff. Unter Zusammenwirken auslesbarer Depotdaten, wie beispielsweise die Anteile bestimmter Depotinhalte, und Tagesnachrichten öffentlich zugänglicher Diensteinrichtungen bzw. -plattformen umfasst das generierte Sendedokument somit auch Vorschläge in Bezug auf das Depot, die der Nutzer "annehmen" oder "ablehnen" kann.

Über die Interaktionsfelder 252a, 252b hat der Nutzer ferner die Möglichkeit Sendedokumente zu individuellen Themen an unterschiedliche, ausgewählte Endeinrichtungen übertragen zu bekommen.

Für die Gesamtfunktionalität der Erfindung werden somit in praktischer Weise auch in Einzelanwendungen bereits verfügbare inhaltsverwaltende, sogenannte Content-Management-Systeme (CMS) mit Personalisierungsfunktionen genutzt, wobei die auf Nutzerseite bereitgestellten Endeinrichtungen bereits handelsübliche Faxgeräte mit Telekommunikationsschnittstelle sein können, so dass die personalisierten Informationen als Faxdokument aufbereitet, gespeichert und beispielsweise einmal täglich versandt werden. Entsprechend können weitere Dokumente im Tagesablauf auf Anforderung entsprechend dem Nutzerprofil und der Nachrichtenlage aufbereitet und versandt werden. Die zurückgesendeten, mit Annotationen versehenen Sendedokumente werden anhand der Dokumentenerkennung, im vorliegenden Beispielsfall nach Zuordnung mittels des eindeutigen Barcodes 251, mit dem zugehörigen ursprünglich versandten Sendedokument verglichen, die Annotationen ausgewertet und das Nutzerprofil entsprechend aktualisiert.

Eine wesentliche Besonderheit der Erfindung liegt somit in der sehr intuitiven, insbesondere mobilen Nutzbarkeit eines interaktiven Informations- und Nachrichtenmediums.

## Patentansprüche

1. Verfahren zum personalisierenden Informations- und/oder Kommunikationsaustausch umfassend die Schritte:
- zentrales Auslesen (13) eines gespeicherten Nutzerprofils,
- unter Ansprechen auf das Nutzerprofil Generieren (14) eines Sendedokuments basierend auf einem Nutzerprofil-spezifisch zusammengestellten Datensatzes,
- Übertragen des Sendedokuments zu einer unter dem Nutzerprofil gespeicherten Endeinrichtung (20),
- Empfangen (16) eines von einer Endeinrichtung (20) rückübertragenen Sendedokuments mit auf Nutzerseite eingefügten Annotationen,
- Zuordnen des rückübertragenen Sendedokuments zu dem entsprechenden, zu der Endeinrichtung (20) übertragenen Sendedokument,
- Auswerten (17) der durch den entsprechenden Nutzer im Dokument eingefügten Annotationen,

2. Verfahren nach Anspruch 1, ferner **dadurch gekennzeichnet, dass**
- unter Ansprechen auf das Auswerten, eine Aktualisierung des entsprechenden Nutzerprofils durchgeführt und gespeichert wird.

3. Verfahren nach Anspruch 1 oder 2, ferner **dadurch gekennzeichnet, dass**
- das Generieren (14) des Sendedokuments das insbesondere automatische Generieren von Interaktionsfeldern (252) in dem Sendedokument umfasst, und das Auswerten (17) das insbesondere automatische Auswerten von durch den Nutzer annotierten Interaktionsfeldern (252) umfasst.

4. Verfahren nach Anspruch 1, 2 oder 3, ferner **dadurch gekennzeichnet, dass**
- der Schritt des Auslesens, das Auslesen des Profils einer dem Nutzer zugeordneten Endeinrichtung (20) mit TK-Schnittstelle umfasst.

5. Verfahren nach Anspruch 4, ferner **dadurch gekennzeichnet, dass**
- unter Ansprechen auf das zugeordnete Endeinrichtungsprofil der Datensatz mit eingebundenen Interaktionsfeldern (252) medienspezifisch formatiert wird.

6. Verfahren nach einem der Ansprüche 1 bis 5, ferner **dadurch gekennzeichnet, dass**
- ein durch die Endeinrichtung (20) empfangenes Sendedokuments derart dem Nutzer angezeigt wird, dass dieser zeitunabhängig Interaktionsfelder (252) annotieren kann.

7. Verfahren nach Anspruch 6, ferner **dadurch gekennzeichnet, dass**
- der Schritt des Anzeigen, das Anzeigen des empfangenen Sendedokuments auf einem mobilen Medium (25, 26), insbesondere auf Papier (25), ePaper oder einer Handheld-Einrichtung (26) umfasst.

8. Verfahren nach Anspruch 7, ferner **dadurch gekennzeichnet, dass**
- vor einem Rückübertragen eines Sendedokuments durch eine Endeinrichtung (20) das angezeigte Sendedokument in die Endeinrichtung (20) eingelesen und digitalisiert wird.

9. Verfahren nach einem der Ansprüche 1 bis 8, ferner **dadurch gekennzeichnet, dass**
- die Generierung (14) von Sendedokumenten unter Verwendung von gespeicherten (12) indexierten Daten, insbesondere in Form von Texten, Bildern und Nachrichten, wie z.B. Emails und/oder Sprachnachrichten erfolgt.

10. Verfahren nach einem der Ansprüche 1 bis 9 ferner **dadurch gekennzeichnet, dass**
- zur Generierung (14) von Sendedokumenten zumindest zeitweise auf dem Nutzer zugeordnete Diensteinrichtungen zugegriffen wird.

11. Verfahren nach einem der Ansprüche 1 bis 10, ferner **dadurch gekennzeichnet, dass**
- zur Generierung (14) von Sendedokumenten zumindest zeitweise auf mit einem Kommunikationsnetz verbundene öffentliche Diensteinrichtungen, insbesondere Onlinedienste und/oder Datenbankdienste umfassend, zugegriffen wird.

12. Verfahren nach einem der Ansprüche 1 bis 11, ferner **dadurch gekennzeichnet, dass**
- ein generiertes Sendedokument zwischengespeichert (15) wird und für eine Informationsabfrage durch die entsprechend zugeordnete Endeinrichtung (20) bereitgehalten und/oder zeitgesteuert an die entsprechend zugeordnete Endeinrichtung (20) ausgesendet wird.

13. Verfahren nach einem der Ansprüche 1 bis 12, ferner **dadurch gekennzeichnet, dass**
- zum Einfügen von Annotationen das generierte Sendedokument auf ein mobiles Medium (25, 26) übertragen.

14. Verfahren nach einem der Ansprüche 1 bis 13, ferner **dadurch gekennzeichnet, dass**
- das Einfügen von Annotationen sprachgesteuert und/oder über eine Eingabeeinrichtung erfolgt.

15. Verfahren nach einem der Ansprüche 1 bis 14, ferner **dadurch gekennzeichnet, dass**
- ein rückübertragenes Sendedokument zwischengespeichert (16) wird.

16. Verfahren nach einem der Ansprüche 1 bis 15, ferner **dadurch gekennzeichnet, dass**
- die Zuordnung eines rückübertragenen Sendedokuments zu einem generierten Sendedokument unter Verwendung einer eingebundenen, eindeutigen Kennung, insbesondere eines Barcodes (251) erfolgt.

17. Verfahren nach einem der Ansprüche 1 bis 16, ferner **dadurch gekennzeichnet, dass**
für den Schritt des Auswertens benutzerspezifischer Annotationen eine optische Zeichenerkennung durchgeführt wird.

18. Verfahren nach einem der Ansprüche 1 bis 17, ferner **dadurch gekennzeichnet, dass**
- zumindest die Schritte des Generierens und des Auswertens automatisch erfolgen und/oder der Schritt des Generierens zeitgesteuert erfolgt.

19. Personalisierungsvorrichtung umfassend
- eine zentrale Sendeeinheit (14, 15) und
- eine mit der zentralen Sendeeinheit zum gegenseitigen Datenaustausch ausgebildete zentrale Empfangseinheit (16, 17), wobei die zentrale Sendeeinheit und die zentrale Empfangseinheit über wenigstens ein Telekommunikationssystem (19, 27, 100) mit wenigstens einer dezentralen Endeinrichtung (20) auf Nutzerseite zur Datenübertragung verbindbar sind, und wobei
- die zentrale Sendeeinheit (14, 15) unter Ansprechen auf ein ausgelesenes, gespeichertes Nutzerprofil zum Generieren eines Nutzerprofil-spezifischen Sendedokuments und zum Übertragen des Sendedokuments zu einer unter dem Nutzerprofil gespeicherten Endeinrichtung (20) ausgebildet ist, und
- die zentrale Empfangseinheit (16, 17) zum Zuordnen eines von einer Endeinrichtung (20) rückübertragenen Sendedokuments mit auf Nutzerseite eingefügten Annotationen zu dem entsprechenden, zu der Endeinrichtung (20) übertragenden Sendedokument und zur Auswertung von in dem rückübertragenen Sendedokument eingebundenen Annotationen ausgebildet ist.

20. Personalisierungsvorrichtung nach Anspruch 19, ferner **dadurch gekennzeichnet, dass**
die zentrale Empfangseinheit (16, 17) eine Auswerteeinheit (17) umfasst, mit Mitteln zur Aktualisierung eines gespeicherten Nutzerprofils unter Ansprechen auf die Auswertung.

21. Personalisierungsvorrichtung nach Anspruch 19 oder 20, ferner **dadurch gekennzeichnet, dass**
- die zentrale Sendeeinheit (14, 15) zum Generieren des Nutzerprofil-spezifischen Sendedokuments unter Einbindung von vorgebbaren und/oder vorgegebenen Interaktionsfeldern (252, 252a, 252b) ausgebildet ist, und
- die zentrale Empfangseinheit (16, 17) zur Auswertung von annotierten Interaktionsfeldern in dem rückübertragenen Sendedokument ausgebildet ist.

22. Personalisierungsvorrichtung nach einem der vorstehenden Ansprüche 19 bis 21, ferner **dadurch gekennzeichnet, dass** die zentrale Sendeeinheit (14, 15) unter Ansprechen auf die unter dem Nutzerprofil gespeicherte Endeinrichtung zum medienspezifischen Formatieren des Nutzerprofil-spezifischen Sendedokuments ausgebildet ist, insbesondere ein Dokumentengenerierungssystem (14) zur benutzerspezifischen Selektion von Informationen und Nachrichten, zur medienspezifischen Formatierung und zur Einbindung von Interaktionsfeldern (252, 252a, 252b) in das Sendedokument umfasst.

23. Personalisierungsvorrichtung nach einem der vorstehenden Ansprüche 19 bis 22, ferner **dadurch gekennzeichnet, dass** die zentrale Sendeeinheit (14, 15) zum Zwecke der Zuordnung zum Einbinden einer eindeutigen Kennung, insbesondere eines Barcodes (251), in das Sendedokument ausgebildet ist.

24. Personalisierungsvorrichtung nach einem der vorstehenden Ansprüche 19 bis 23, ferner **gekennzeichnet durch** ein mit der zentralen Sendeeinheit (14, 15) zusammenwirkendes Content-Management-System (12) zur Speicherung und Bereitstellung von indexierten Daten, insbesondere in Form von Texten, Bildern und/oder Nachrichten, umfasst.

25. Personalisierungsvorrichtung nach Anspruch 24, ferner **dadurch gekennzeichnet, dass** dem Content-Management-System ein Spracherkennungssystem zur Konvertierung von Sprach- in Textdateien zugeordnet ist.

26. Personalisierungsvorrichtung nach einem der vorstehenden Ansprüche 19 bis 25, ferner **gekennzeichnet durch** ein mit der zentralen Sendeeinheit (14, 15) zusammenwirkendes Personalisierungssystem (16) zur Verwaltung individueller Benutzerprofile.

27. Personalisierungsvorrichtung nach einem der vorstehenden Ansprüche 19 bis 26, ferner **dadurch gekennzeichnet, dass** die zentrale Sendeeinheit (14, 15) mit dem Nutzer zugeordneten Diensteinrichtungen, insbesondere Email-Sende-/Empfangs- und/oder -verwaltungseinrichtungen, Kalendereinrichtungen und/oder Datenbankeinrichtungen zumindest zeitweise zum Datenaustausch verbunden ist.

28. Personalisierungsvorrichtung nach einem der vorstehenden Ansprüche 19 bis 27, ferner **dadurch gekennzeichnet, dass** die zentrale Sendeeinheit (14, 15) wenigstens zeitweise auf mit einem öffentlichen Kommunikationsnetz verbundene Diensteinrichtungen, insbesondere Onlinedienste und/oder Datenbankdienste umfassend, über wenigstens ein Kommunikationsnetz zugreift.

29. Personalisierungsvorrichtung nach einem der vorstehenden Ansprüche 19 bis 28, ferner **dadurch gekennzeichnet, dass** die zentrale Sendeeinheit (14, 15) eine Puffereinheit (15) umfasst, die generierte Sendedokumente zwischenspeichert und für eine Informationsabfrage durch eine dem jeweiligen Nutzerprofil entsprechend zuordenbare Endeinrichtung (20) bereithält und/oder zeitgesteuert aussendet.

30. Personalisierungsvorrichtung nach einem der vorstehenden Ansprüche 19 bis 29, ferner **dadurch gekennzeichnet, dass** die zentrale Empfangseinheit (16, 17) eine Dokumentenempfangseinheit (16) zur Aufnahme und Zwischenspeicherung von rückübertragenen Sendedokumenten umfasst.

31. Personalisierungsvorrichtung nach einem der vorstehenden Ansprüche 19 bis 30, ferner **gekennzeichnet durch** eine zentrale Einheit (11) zur automatischen Steuerung und/oder Regelung der Personalisierungsabläufe.

32. Personalisierungsvorrichtung nach einem der vorstehenden Ansprüche 19 bis 31, ferner **dadurch gekennzeichnet, dass** eine Erkennung und/oder Auswertung benutzerspezifischer Annotationen mittels OMR, OCR, INR, ICR und/oder vergleichbaren Funktionsmodulen erfolgt.

33. Informations- und/oder Kommunikationssystem umfassend
- eine Vorrichtung (10) nach einem der Ansprüche 19 bis 32 und
- wenigstens eine mit der Vorrichtung über wenigstens ein Telekommunikationsnetz verbindbare dezentrale Endeinrichtung (20) mit Telekommunikationsschnittstelle auf Nutzerseite.

34. System nach Anspruch 33, ferner **dadurch gekennzeichnet, dass**
- die wenigstens eine Endeinrichtung (20) Schnittstellen zur Übertragung von empfangenen Sendedokumenten auf ein externes Medium und zum Einlesen extern annotierter Sendedokumenten umfasst.

35. System nach Anspruch 33 oder 34, ferner **dadurch gekennzeichnet, dass** die wenigstens eine Endeinrichtung (20) einen Drucker (23) und Scanner (24) umfasst, und/oder ein spezialisiertes Endgerät mit vergleichbaren Funktionen.

36. System nach einem der Ansprüche 33 bis 35, ferner **dadurch gekennzeichnet, dass** die wenigstens eine Endeinrichtung (20) einen PC mit TK-Anbindung umfasst.

37. System nach einem der Ansprüche 33 bis 36, ferner **dadurch gekennzeichnet, dass** die wenigstens eine Endeinrichtung (20) eine Anbindungs-Station und eine Kommunikationssoftware für ein mobiles Gerät, insbesondere für ein PDA (26) umfasst oder als mobile Endeinrichtung (20) ausgebildet ist.

38. System nach einem der Ansprüche 33 bis 37, ferner **dadurch gekennzeichnet, dass** die Endeinrichtung (20) Mittel umfasst, um ein generiertes Sendedokument durch Informationsabfrage bei der Vorrichtung (10) nach einem der Ansprüche 19 bis 32 abzurufen und/oder ein übertragenes Sendedokument zwischen zu speichern.

39. System nach einem der Ansprüche 33 bis 38, ferner **dadurch gekennzeichnet, dass** die Endeinrichtung (20) angepasst ist unterschiedliche Medien als Informationsträger für ein Sendedokument zu verwenden, insbesondere Papier und/oder ePaper.

40. System nach einem der Ansprüche 33 bis 39, ferner **dadurch gekennzeichnet, dass** die Verbindung unter Verwendung wenigstens eines Telekommunikationsnetz, insbesondere eines Mobilfunknetzes, des Internets, eines Intranetzes und/oder eines öffentlichen Festnetzes, lediglich kurzzeitig und bedarfspezifisch erfolgt.

41. Verwendung einer Vorrichtung nach einem der Ansprüche 19 bis 32, eines Systems und/oder einer Endeinrichtung für ein System nach einem der Ansprüche 33 bis 40 zur Durchführung eines Verfahrens nach einem der Ansprüche bis 1 bis 18.

42. Computerprogrammprodukt mit auf wenigstens einem computerlesbaren Träger gespeichertem Programmcode zur Durchführung des Verfahrens nach einem der Ansprüche 1 bis 18, wenn das Programmprodukt auf einer einen Prozessor umfassenden Einrichtung mit TK-Schnittstelle abläuft.

43. Computerprogramm mit Programmcode zur Durchführung des Verfahrens nach einem der Ansprüche 1 bis 18, wenn das Programm auf einer einen Prozessor umfassenden Einrichtung mit TK-Schnittstelle abläuft.

44. Digitales Speichermedium, insbesondere Diskette oder CD, mit elektronisch auslesbaren Steuersignalen, die so mit einer programmierbaren Einrichtung mit TK-Schnittstelle zusammenwirken können, dass ein Verfahren nach einem der Ansprüche 1 bis 18 ausgeführt wird.
